(19) Europäisches Patentamt / European Patent Office / Office européen des brevets

(11) **EP 2 427 307 B1**

(12) **EUROPÄISCHE PATENTSCHRIFT**

(45) Veröffentlichungstag und Bekanntmachung des Hinweises auf die Patenterteilung:
**17.07.2013   Patentblatt 2013/29**

(21) Anmeldenummer: **10717164.7**

(22) Anmeldetag: **06.05.2010**

(51) Int Cl.:
**B29D 7/01** (2006.01)     **B26D 3/28** (2006.01)
**B26D 7/01** (2006.01)

(86) Internationale Anmeldenummer:
**PCT/EP2010/056201**

(87) Internationale Veröffentlichungsnummer:
**WO 2010/130633 (18.11.2010 Gazette 2010/46)**

(54) **FOLIENSCHÄLVERFAHREN**

FILM PEELING METHOD

PROCÉDÉ DE PELAGE DE FEUILLES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.05.2009   DE 102009020621**

(43) Veröffentlichungstag der Anmeldung:
**14.03.2012   Patentblatt 2012/11**

(73) Patentinhaber: **Fecken-Kirfel GmbH & Co. KG
52070 Aachen (DE)**

(72) Erfinder:
• **TILLMANN, Michael
  52146 Würselen (DE)**
• **TÖNNES, Helmut
  52355 Düren (DE)**

(74) Vertreter: **von Kreisler Selting Werner
Deichmannhaus am Dom
Bahnhofsvorplatz 1
50667 Köln (DE)**

(56) Entgegenhaltungen:
**AT-A1- 501 770     DE-B4-102006 027 271
US-A- 4 791 970**

**Beschreibung**

Die Erfindung betrifft ein Verfahren zum Abschälen einer Folie von einem Materialblock während dieser um eine Achse gedreht wird, und insbesondere zum Schälen einer Schaumstofffolie.

In DE 10 2006 027 271 B4 ist ein Verfahren zum Anfahren einer Schälvorrichtung für eine Folie von einem Materialblock beschrieben. Bei diesem Verfahren wird der Materialblock um eine Achse gedreht, während ein generell tangential zum Materialblock angeordneter Messerbalken kontinuierlich so verstellt wird, dass er in Bezug auf den Materialblock eine spiralförmige Bewegung mit sich stetig verkleinerndem Abstand zur Achse ausführt. In einer Anschälphase wird das Messer während des Drehens des Materialblocks in den Materialblock hineingefahren, um die Oberfläche des Materialblocks für den anschließenden Schälvorgang vorzubereiten. Danach wird die Solldicke der Folie über eine Anstellvorrichtung eingestellt und der Materialblock wird um maximal eine Umdrehung, in der das Sollmaß der Folie erreicht wird, verdreht. Schließlich wird das bis dahin abgeschälte Material durch einen Schnitt quer zur Folie abgetrennt. Bei diesem Verfahren wird die zu erreichende Foliendicke durch die Spiralsteigung bestimmt, die in der Schälphase eingestellt ist.

Ein beim Folienschälen auftretendes Phänomen besteht darin, dass bei einem Übergang von kleiner auf große Schichtstärke die nächstfolgende Schicht stets zu dick wird. Umgekehrt wird bei einem Wechsel von einer dickeren auf eine dünnere Schicht die nächstfolgende Schicht stets zu dünn. Diese Erscheinung ist auf die Kompressibilität des Schaumstoffs und dessen Rückstellverhalten zurückzuführen. Es führt dazu, dass sich die Sollschichtdicke erst nach dem Abschälen einer größeren Folienlänge einstellt.

Der Erfindung liegt die Aufgabe zugrunde, ein Folienschälverfahren anzugeben, wie dem möglichst wenig Material durch die Umstellung der Schichtstärken verloren geht.

Das erfindungsgemäße Verfahren ist durch den Patentanspruch 1 definiert. Es weist die folgenden Schritte auf:

- Durchführen einer Anschälphase zur Erzeugung einer spiralförmigen Oberfläche des Materialblockes, bei der sich der Radius mit zunehmendem Drehwinkel verkleinert.

- Durchführen einer Übergangsphase in einem Winkelbereich von weniger als 360° mit veränderter Spiralsteigung bis zum Erreichen der Sollschichtdicke,

- Durchführen einer Schälphase mit einer Spiralsteigung, die derjenigen der Anschälphase entspricht, wobei jedes Mal, während das Messer den Winkelbereich der Übergangsphase an dem Materialblock durchläuft, die Spiralsteigung der Übergangsphase eingestellt wird.

Das erfindungsgemäße Verfahren sieht vor, dass während jeder Umdrehung des Materialblocks ein Übergangsschritt durchgeführt wird, bei dem das Messer ein Stück weit näher an die Achse herangefahren wird, so dass der Durchmesser der Spirale stufenförmig verkleinert wird. Der Übergangsschritt erstreckt sich über einen Bruchteil einer Umdrehung, beispielsweise um eine Viertelumdrehung, also 90°. Die Dicke der erzeugten Schicht wird durch die Spiralsteigung während des Übergangsbereichs bestimmt, die Spiralsteigung ist der Vorschub des Messers pro Umdrehung des Blockes in Richtung auf die Achse des Blockes.

Bei dem erfindungsgemäßen Verfahren wird in der Schälphase mit gleicher Spiralsteigung gearbeitet wie in der Anschälphase. Daher tritt der üblicherweise zu beobachtende Effekt der ungenauen Schichtstärke nach Wechsel der Einstellung nicht auf, mit der Folge, dass weniger Abfall entsteht und das erfindungsgemäße Verfahren eine bessere Ausnutzung hat. Während bei dem bekannten Verfahren die Spiralsteigung die Schichtdicke bestimmt, ist bei dem erfindungsgemäßen Verfahren die Schichtdicke unabhängig von der Spiralsteigung. Die Spiralsteigung kann sogar bis auf 0 reduziert werden, in diesem Fall erfolgt ein Schälen "ohne Steigung außerhalb des Übergangsbereichs".

Der Winkelbereich der Übergangsphase beträgt vorzugsweise mindestens 20°, insbesondere mindestens 45° einer Umdrehung. Um zu steile Spiralsteigungen während der Übergangsphase zu vermeiden, sollte die Übergangsphase nicht zu kurz gewählt werden. Die Obergrenze der Übergangsphase liegt bei etwa 180°. Bevorzugt ist eine Übergangsphase von etwa 90°.

Das erfindungsgemäße Verfahren eignet sich auch für das Schälen zweier verschiedener Sollschichtstärken aus demselben Materialblock, ohne dass dieser angehalten werden müsste. Hierzu ist vorgesehen, dass an eine erste Schälphase mit einer ersten Sollschichtdicke sich eine Übergangsphase anschließt, die zu einer zweiten Schälphase mit einer zweiten Sollschichtdicke führt. Hierbei ist lediglich das in der Übergangsphase entstandene Material zu verwerfen, bei dem sich die Schichtdicke ändert und somit nicht der Sollschichtdicke entspricht.

Im Folgenden werden unter Bezugnahme auf die Zeichnungen Ausführungsbeispiele der Erfindung näher erläutert.

Es zeigen:

Fig. 1     eine schematische Darstellung des Schälvorganges,

Fig. 2     eine Darstellung der spiralförmigen Bahn, welche das Messer in Bezug auf die Achse des Materialblocks beschreibt,

Fig. 3     eine Abwicklung der spiralförmigen Bahn, wobei die einzelnen Umdrehungen untereinander dargestellt sind,

Fig. 4     eine Abwicklung der spiralförmigen Bahn bei einem Verfahren, bei dem nacheinander unterschiedliche Materialstärken hergestellt werden,

Fig. 5     ein Beispiel mit sehr großem Anschälwinkel zum zeitsparenden Abtragen einer großen Materialmenge beim Anschälen und

Fig. 6     ein Ausführungsbeispiel des Schälens ohne Steigung im Übergangsbereich.

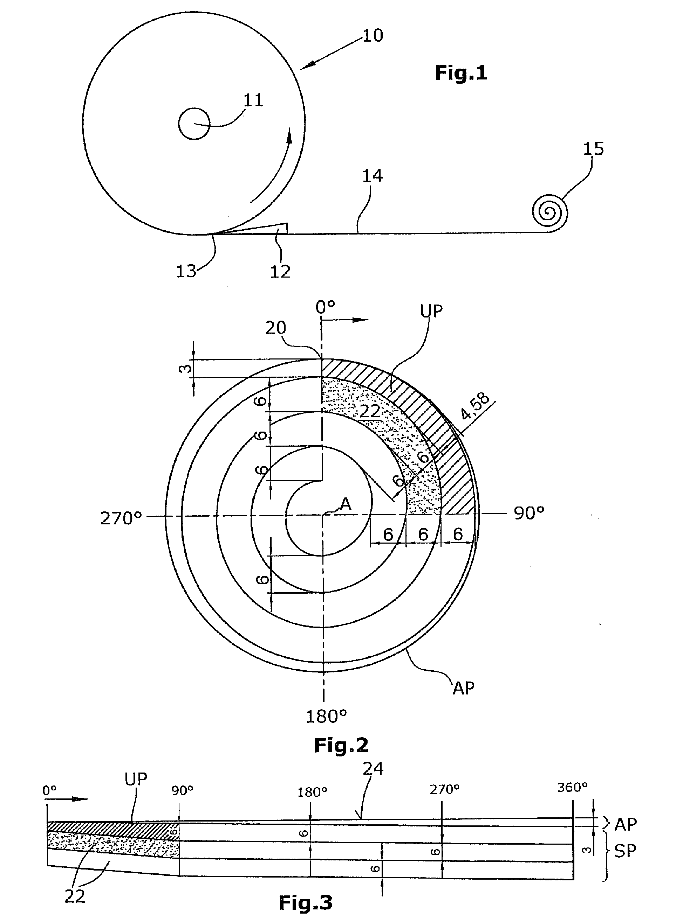

In Figur 1 ist ein Materialblock 10 aus Schaumstoff dargestellt, der zu einer Schaumstofffolie verarbeitet werden soll. Der Materialblock 10 ist generell zylindrisch. Er sitzt auf einer Welle 11, die entlang der Achse durch den Materialblock hindurchgesteckt ist. An den Materialblock ist ein Messer 12 angesetzt, das an einem verstellbaren Messerbalken etwa tangential zum Materialblock angeordnet ist und eine Messerspitze 13 aufweist. Das Messer 12 kann ein umlaufendes Messerband sein. Seine Position in Bezug auf den Materialblock 10 wird von einer Steuereinrichtung derart gesteuert, dass das Messer während der Drehung des Materialblocks 10 mit konstanter Geschwindigkeit radial in Richtung auf die Achse A bewegt wird und somit eine im wesentlichen spiralförmige Bahn in Bezug auf die Achse des Materialblocks beschreiben kann. Das Messer schält eine Folie 14 von dem Materialblock ab, die zu einem Wickel 15 aufgerollt wird. Die Abzugsvorrichtung sorgt dafür, dass die Folie 14 mit konstanter Fördergeschwindigkeit bewegt wird, d. h. mit einer Geschwindigkeit, die unabhängig von dem variierenden Durchmesser des Materialblocks ist.

Figur 2 zeigt eine Seitenansicht des Materialblocks 10, wobei die Bahn, auf der sich die Spitze 13 des Messers bewegt, dargestellt ist. In der Zeichnung sind die Größenverhältnisse verzerrt dargestellt, weil die Schichtstärke aus Anschauungsgründen übertrieben groß gewählt ist.

Als Bezugswinkel von 0° ist der Beginn der Übergangsphase UP, der auch zugleich der Startwinkel der Anschälphase AP ist.

Das Messer wird im Startpunkt 20 an den Materialblock angelegt und anschließend während der Drehung des Materialblocks mit konstanter Geschwindigkeit zur Achse A hin bewegt. Der zunächst zylindrische Materialblock wird während der Anschälphase AP spiralförmig abgeschnitten. Die Spiralsteigung beträgt bei diesem Ausführungsbeispiel in der Anschälphase 3 mm/U. Nach einer vollen Umdrehung beträgt also die Eindringtiefe des Messers in den Materialblock 3 mm. Die Anschälphase AP erstreckt sich über eine volle Umdrehung, also über 360°. Dann beginnt die Übergangsphase UP, bei der die Spiralsteigung so eingestellt wird, dass sich am Ende der Übergangsphase die Sollschichtdicke einstellt, hier: 6 mm.

Für die Übergangsphase wird die Spiralsteigung φ eingestellt auf

$$\varphi = (\Delta \cdot A) + a$$

Hierin ist

φ die Spiralsteigung der Übergangsphase,
a die Spiralsteigung in der Anschälphase,
b die Spiralsteigung, mit der bei einem gleichmäßigen Schälvorgang die Soll-Schichtstärke erreicht würde,
$\Delta$ die Differenz b-a,
A der Quotient 360° geteilt durch: Winkelbereich der Übergangsphase.

Die Gleichung ergibt also bei dem vorliegenden Ausführungsbeispiel eine Spiralsteigung φ von

$$((6 \text{ mm/U} - 3 \text{ mm/U}) \cdot 4) + 3 \text{ mm/U} = 15 \text{ mm/U}$$

in der Übergangsphase UP. Wenn die Schichtdicke von b = 6 mm bei 90° erreicht ist, wird mit derselben Spiralsteigung weitergearbeitet, wie in der Anschälphase AP, so dass sich parallele Schneidlinien bis zum Ende der Umdrehung ergeben. Daran schließt sich dann ein Übergangsbereich 22 von 90° an, in welchem die Spiralsteigung φ auf die gleiche

Größe eingestellt wird, wie in der Übergangsphase UP, nämlich hier auf 15 mm/U. Die Schichtdicke beträgt weiterhin 6 mm. In dem ersten Quadranten von 0° - 90° beträgt die Spiralsteigung 15 mm/U und in den drei verbleibenden Quadranten beträgt die Spiralsteigung 3 mm/U.

Figur 3 zeigt die lineare Abwicklung der Bahnen. Die Linie 24 bezeichnet den ursprünglichen Blockumfang des zylindrischen Blockes. Dann folgt die Anschälphase AP mit einer vollständigen Umdrehung. Hieran schließt sich die Übergangsphase UP an und schließlich eine Beibehaltung der Materialstärke, konstant auf hier 6 mm. Der Bearbeitungsvorgang erfolgt in einer Art Treppenfunktion, wobei während jeder Umdrehung ein Übergangsbereich 22 von 90° gebildet wird, in dem die Eindringtiefe des Messers in den Materialblock stärker erhöht wird als in den übrigen Bereichen.

Während des Schälens kann nach Ablauf der Anschälphase AP unmittelbar nach Beendigung der Umstellphase UP das bisher geschälte Material abgeschnitten und verworfen werden.

Versuche haben ergeben, dass die gemessenen Schichtstärken in allen Winkelbereichen den gewünschten Werten entsprechen. Insbesondere wurde keine Abweichung zwischen dem Normalbereich und dem Übergangsbereich festgestellt.

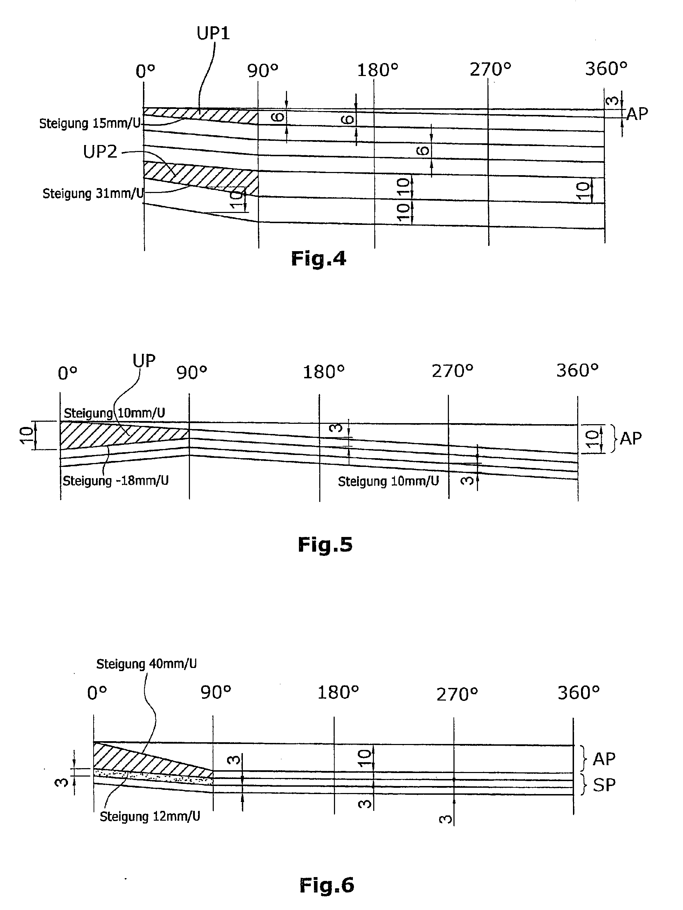

Figur 4 zeigt ein Beispiel mit zwei Übergangsphasen UP1 und UP2, in denen jeweils auf eine andere Schichtdicke übergegangen wird. Nach der ersten Übergangsphase UP1 folgen mehrere Umdrehungen mit der Schichtstärke von 6 mm. Danach folgt ein Übergang auf 10 mm. Hierzu wird die Spiralsteigung $\varphi2$ in der Übergangsphase UP2 ermittelt zu

$$\varphi2 = (\Delta \cdot 4) + a = ((10 \text{ mm/U} - 3 \text{ mm/U}) \cdot 4) + 3 \text{ mm/U} = 31 \text{ mm/U}$$

Nur in der Übergangsphase UP2 entsteht eine Schichtdicke, die verworfen werden muss.

Figur 5 zeigt ein Beispiel des Übergangs von einer großen auf eine kleine Schichtstärke. In der Anschälphase AP wird mit einer Spiralsteigung $\varphi$ von 10 mm/U gearbeitet, um möglichst viel Material von dem Materialblock zu entfernen und diesen schnell zu "säubern". Dabei wird über eine Umdrehung eine Foliendicke erreicht, die schließlich den Wert 10 mm annimmt. Die zu erreichende Schichtdicke b beträgt 3 mm. Die Spiralsteigung $\varphi$ im Übergangsbereich UP wird eingestellt auf

$$\varphi = (\Delta \cdot 4) + a = ((3 \text{ mm/U} - 10 \text{ mm/U}) \cdot 4) + 10 \text{ mm/U}$$
$$= (- 7 \text{ mm/U} \cdot 4) + 10 \text{ mm/U} = - 18 \text{ mm/U}$$

Dies ist die Steigung der unteren Linie der Übergangsphase UP. Der Anschälwinkel ist negativ. Der Materialblock entfernt sich von dem Messerbalken. Bei 90° wird auf die ursprüngliche Steigung von 10 mm/U zurückgestellt und für weitere 270° wird mit diesem Wert geschält.

Figur 6 zeigt ein "Schälen ohne Steigung außerhalb des Zustellbereichs". In der Anstellphase erfolgt im ersten Quadranten (0° - 90°) ein schnelles Eindringen des Messers in den Materialblock und anschließend wird mit einer Steigung von 0 weitergefahren und somit ein zylindrischer Schnitt erzeugt. Die Spiralsteigung der Übergangsphase UP beträgt

$$\varphi = (\Delta \cdot 4) + a = ((3 \text{ mm/U} - 0 \text{ mm/U}) \cdot 4) + 0 \text{ mm/U}$$
$$= (3 \text{ mm/U} \cdot 4) + 0 \text{ mm/U} = 12 \text{ mm/U}$$

Damit wird die gewünschte Schichtdicke von 3 mm in der Schälphase SP erreicht.

Das Verfahren wird mit einer Schälmaschine mit elektronischer Schichtstärkeneinstellung über hochdynamische Servoantriebe und einer intelligenten Steuereinrichtung durchgeführt. Die Vorteile des Verfahrens sind:

- Erreichen der gewünschten Sollschichtstärke innerhalb von Bruchteilen einer Umdrehung im Winkelbereich der Übergangsphase UP,

- Verwendbarkeit für solche Anwendungen, bei denen die Sollschichtstärke während des Verfahrens variieren soll,

- optimale Materialausnutzung, da nicht durch den vorhergehenden Schnitt eine Deformation der nächsten Schicht hervorgerufen wird,

- Schichtstärkenwechsel immer im gleichen Winkelbereich; dadurch wird die Schichtstärke an jeder Stelle immer exakt erreicht.

**Patentansprüche**

1. Verfahren zum Abschälen einer Folie von einem Materialblock (10), während dieser um eine Achse (A) gedreht wird, unter Verwendung einer Steuereinrichtung, die ein Messer (12) so verschiebt, dass es in Bezug auf die Achse des Materialblocks eine spiralförmige Bahn beschreibt, welche eine Spiralsteigung ($\varphi$) bildet, die durch den Vorschub des Messers pro Umdrehung des Blockes definiert ist, mit den Schritten:

   - Durchführen einer Anschälphase (AP) zur Erzeugung einer spiralförmigen Oberfläche des Materialblockes, bei der sich der Radius mit zunehmendem Drehwinkel verkleinert,
   - Durchführen einer Übergangsphase (UP) in einem Winkelbereich von weniger als 360° mit veränderter Spiralsteigung bis zum Erreichen der Sollschichtdicke,
   - Durchführen einer Schälphase (SP) mit einer Spiralsteigung, die derjenigen der Anschälphase entspricht, wobei jedes Mal, während das Messer den Winkelbereich der Übergangsphase (UP) an dem Materialblock durchläuft, die Spiralsteigung der Übergangsphase eingestellt wird.

2. Verfahren nach Anspruch 1, **dadurch gekennzeichnet, dass** für die Übergangsphase (UP) die Spiralsteigung ($\varphi$) eingestellt wird auf

$$\varphi = (\Delta \cdot A) + a$$

wobei a die Spiralsteigung in der Anschälphase ist, b die Spiralsteigung ist, mit der bei einem gleichmäßigen Schälvorgang die Soll-Schichtdicke erreicht würde, $\Delta$ die Differenz b-a ist und A den Quotienten aus 360° und dem Winkelbereich der Übergangsphase darstellt.

3. Verfahren nach Anspruch 1 oder 2, **dadurch gekennzeichnet, dass** der Winkelbereich der Übergangsphase mindestens 20° beträgt, vorzugsweise mindestens 45°.

4. Verfahren nach einem der Ansprüche 1 - 3, **dadurch gekennzeichnet, dass** der Winkelbereich der Übergangsphase weniger als 180° beträgt und vorzugsweise 90°.

5. Verfahren nach einem der Ansprüche 1 - 4, **dadurch gekennzeichnet, dass** die Anschälphase einen Winkelbereich von genau einer Umdrehung oder mehr einnimmt.

6. Verfahren nach einem der Ansprüche 1 - 5, **dadurch gekennzeichnet, dass** an eine erste Schälphase mit einer ersten Sollschichtdicke sich ein Übergangsbereich anschließt, der zu einer zweiten Schälphase mit einer zweiten Sollschichtdicke führt.

**Claims**

1. A method for peeling a film from a material block (10) while the block is rotated about an axis (A), using a control means that displaces a knife (12) such that it follows a spiral-shaped trajectory with respect to the material block axis, said trajectory forming a spiral pitch ($\varphi$) defined by the feed of the knife per turn of the block, said method comprising the following steps:

   - performing an initial peeling phase (AP) for forming a spiral-shaped surface of the material block, whose radius decreases as the angle of rotation increases,
   - performing a transition phase (UP) in an angular range of less than 360° with a changed spiral pitch until the set layer thickness is reached,
- performing a peeling phase (SP) with a spiral pitch corresponding to the pitch of the initial peeling phase, the spiral pitch of the transition phase being set each time the knife passes through the angular range of the transition phase (UP) on the material block.

2. The method of claim 1, **characterized in that** the spiral pitch ($\varphi$) for the transition phase (UP) is set to

$$\varphi = (\Delta \cdot A) + a$$

where a is the spiral pitch in the initial peeling phase, b is the spiral pitch with which the set layer thickness would be reached in a uniform peeling operation, $\Delta$ is the difference b-a, and A is the quotient of 360° divided by the angular range of the transition phase.

3. The method of claim 1 or 2, **characterized in that** the angular range of the transition phase is at least 20°, preferably at least 45°.

4. The method of one of claims 1-3, **characterized in that** the angular range of the transition phase is less than 180°, preferably 90°.

5. The method of one of claims 1-4, **characterized in that** the initial peeling phase covers an angular range of exactly one turn or more.

6. The method of one of claims 1-5, **characterized in that** a first peeling phase with a first set layer thickness is followed by a transition range that leads to a second peeling phase with a second set layer thickness.


**Revendications**

1. Procédé pour enlever une couche d'une feuille d'un bloc de matériau (10) pendant que celui-ci est mis en rotation autour d'un axe (A), avec utilisation d'un dispositif de commande qui déplace une lame (12) de telle façon que cette dernière décrit, par rapport à l'axe du bloc de matériau, une trajectoire en spirale qui forme un pas de spirale ($\varphi$) qui est défini par l'avance de la lame par rotation du bloc, comprenant les étapes suivantes :

- réalisation d'une phase initiale d'enlèvement de couche (AP) pour la production d'une surface en spirale du bloc de matériau, au cours de laquelle le rayon diminue quand l'angle de rotation augmente,
- réalisation d'une phase de transition (UP) dans une plage angulaire de moins de 360° avec un pas de spirale modifié jusqu'à l'obtention de l'épaisseur de couche de consigne,
- réalisation d'une phase d'enlèvement de couche (SP) avec un pas de spirale qui correspond à celui de la phase initiale d'enlèvement de couche, le pas de spirale de la phase de transition étant réglé à chaque fois que la lame parcourt la plage angulaire de la phase de transition (UP) sur le bloc de matériau.

2. Procédé selon la revendication 1, **caractérisé en ce que**, pour la phase de transition (UP), le pas de spirale ($\varphi$) est réglé à

$$\varphi = (\Delta \cdot A) + a$$

a étant le pas de spirale dans la phase initiale d'enlèvement de couche, b étant le pas de spirale pour lequel, lors d'un processus d'enlèvement de couche régulier, l'épaisseur de couche de consigne serait atteintes étant la différence b - a et A représentant le quotient de 360° et de la plage angulaire de la phase de transition.

3. Procédé selon la revendication 1 ou 2, **caractérisé en ce que** la plage angulaire de la phase de transition est au moins égale à 20°, de préférence au moins égale à 45°.

**4.** Procédé selon une des revendications 1 à 3, **caractérisé en ce que** la plage angulaire de la phase de transition est inférieure à 180° et de préférence égale à 90°.

**5.** Procédé selon une des revendications 1 à 4, **caractérisé en ce que** la phase initiale d'enlèvement de couche adopte une plage angulaire correspondant à exactement une rotation ou davantage.

**6.** Procédé selon une des revendications 1 à 5, **caractérisé en ce qu'**une première phase d'enlèvement de couche avec une première épaisseur de couche de consigne est suivie d'une plage de transition qui conduit à une deuxième phase d'enlèvement de couche avec une deuxième épaisseur de couche de consigne.

**Fig.1**

**Fig.2**

**Fig.3**

**UP1**

0°   90°   180°   270°   360°

Steigung 15mm/U

**UP2**

Steigung 31mm/U

AP

**Fig.4**

**UP**

0°   90°   180°   270°   360°

Steigung 10mm/U

Steigung -18mm/U

Steigung 10mm/U

} AP

**Fig.5**

Steigung 40mm/U

0°   90°   180°   270°   360°

} AP

} SP

Steigung 12mm/U

**Fig.6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006027271 B4